# EUROPÄISCHE PATENTSCHRIFT

(11) **EP 0 592 880 B1**
(45) Veröffentlichungstag und Bekanntmachung des Hinweises auf die Patenterteilung: **09.04.1997**
(21) Anmeldenummer: 93115799.4
(22) Anmeldetag: 30.09.1993
(51) Int. Cl.: A01N 47/30

(54) **Wässriges Dispersionskonzentrat, enthaltend Linuron als Wirkstoff**
Aqueous dispersion concentrate, containing linuron as active ingredient
Dispersion concentrée aqueuse, contenant le linuron comme agent actif

(30) Priorität: 13.10.1992 DE 4234464
(43) Veröffentlichungstag der Anmeldung: 20.04.1994
(73) Patentinhaber: Hoechst Schering AgrEvo GmbH, 13342 Berlin (DE)
(72) Erfinder: Frisch, Gerhard, Dr., D-61273 Wehrheim/Taunus (DE); Maier, Thomas, Dr., D-60529 Frankfurt/Main (DE)

(56) Entgegenhaltungen:
- EP-A- 0 017 879
- EP-A- 0 281 398
- EP-A- 0 357 559
- EP-A- 0 402 769
- EP-A- 0 505 053
- FR-A- 2 323 435
- FR-A- 2 447 748
- US-A- 4 349 379
- US-A- 4 411 694

## Beschreibung

Die vorliegende Erfindung betrifft ein wäßriges, herbizides Dispersionskonzentrat, welches Linuron als Wirkstoff enthält.

Von dem Herbizid [3-(3,4-Dichlorphenyl)-1-methoxy-1-Methylharnstoff] sind bislang Mischformulierungen in Form benetzbarer Pulver sowie Formulierungen in Form von Emulsionskonzentraten (Handelsprodukt ®Afalon S der HOECHST AG) und Suspensionskonzentraten bekannt, wobei letztere den Vorteil haben, daß sie weder stäuben, noch brennbar sind. Allerdings ergaben sich bei der Formulierungen in der wäßrigen Dispersionsvariante Probleme bezüglich des Kristallwachstums von Linuron.

Bekannt sind auch Mischformulierungen, in denen Linuron in Kombination mit anderen Herbiziden nahezu kein Kristallwachstum zeigt (EP-A-0,402,769; EP-A-0,481,404).

Desweiteren sind Formulierungen bekannt, unter anderem auch bei Linuron, bei welchen unter Verwendung von Farbstoffen das Wachstum von Kristallen gehemmt wurde (EP-A-17879, US-A-4,441,919, DE-A-2,301,922, US-A-3,987,187 und DE-A-4,013,524).

Die bekannten farbstoffhaltigen wäßrigen Dispersionskonzentrate weisen beträchtliche Nachteile auf (US-A-4,441,919). Nach der Herstellung obengenannter Dispersionskonzentrate müssen die Produktionsanlagen, Applikationsgeräte und Behälter aufwendig und oft mehrfach gespült werden, um anhaftende Reste der fettlöslichen Farbstoffe zu entfernen. Insbesondere bei multifunktionell genutzten Produktionsanlagen, Applikationsgeräten und Behältern sind die obengenannten Nachteile problematisch und führen nach aufwendiger Reinigung zu Reinigungsflüssigkeiten welche mit fettlöslichen Farbstoffen kontaminiert sind und entsorgt werden müssen.

Desweiteren ist bekannt, daß bestimmte substituierte Phenole das Kristallwachstum bzw. das Auskristallisieren von Wirkstoffen in organisch/wässrigen Emulsionen stark vermindern oder unterbinden, wobei der Wirkstoff jedoch in der Ölphase vorliegen muß (EP-A-0,357,559).

Es stellte sich nun die Aufgabe, wäßrige Dispersionen von Linuron, das eine Wasserlöslichkeit von 81 mg/kg bei 24°C hat, herzustellen, die zwar frei von kristallwachstumshemmenden Farbstoffen sind, aber auch kein Kristallwachstum bei Lagerung im Temperaturbereich -10°C bis 50°C über mehr als 3 Monate zeigen sollten.

Überraschenderweise wurde nun gefunden, daß eine Mischung von substituierten Phenolen und Polyvinylpyrrolidon, insbesondere ®Luviskol K-Typen, in einem Verhältnis von 1 : 100 bis 100 : 1, vorzugsweise jedoch 1 : 20 bis 20 : 1, insbesondere 1 : 20 bis 10 : 1, wobei der Gesamtanteil dieser Mischung 0,1 bis 25 %, vorzugsweise jedoch 0,5 bis 12 % betragen kann, diesen gewünschten Effekt zeigt, und zwar vorzugsweise bei bestimmten Dispersionskonzentraten von Linuron. Schon bei Monolinuron, einem chemisch sehr nahe verwandten Molekül, ist die kristallwachstumshemmende Wirkung recht schwach.

Bei den in den erfindungsgemäßen wäßrigen Dispersionskonzentraten verwendeten Phenolen handelt es sich um mono-, di- oder trisubstituierte (C₁-C₁₈)-Alkylphenole, vorzugsweise um trisubstituierte (C₁-C₁₀)-Alkylphenole, insbesondere um Tributylphenol. Bei den Polyvinylpyrrolidonen handelt es sich unter anderen auch um in ortho- oder para-Stellung substituierte Polyvinylpyrrolidone, die in Wasser verschiedene Viskositäten aufweisen.

Gegenstand der vorliegenden Erfindung ist somit ein wäßriges Dispersionskonzentrat, enthaltend
a) 1 bis 50 Gew.-%, vorzugsweise 8 bis 45 Gew.-%, Linuron,
b) 0,1 bis 25 Gew.-%, vorzugsweise 0,5 bis 12 Gew.-% der in einem Verhältnis von 1 : 100 bis 100 : 1, vorzugsweise 1 : 20 bis 20 : 1, insbesondere 1:20 bis 10:1, gemischten substituierten Phenole und Polyvinylpyrrolidone,
c) 0,5 bis 20 Gew.-%, vorzugsweise 0,5 bis 6 Gew.-%, insbesondere 0,5 bis 4 Gew.-%, eines Ligninsulfonats,
d) 0,1 bis 10 Gew.-%, vorzugsweise 0,1 bis 5 Gew.-%, insbesondere 0,1 bis 3 Gew.-%, eines Salzes einer polymerisierten Alkylnaphthalinsulfonsäure,
e) 20 bis 80 Gew.-%, vorzugsweise 30 bis 65 Gew.-%, Wasser.

Linuron (Bestandteil a) ist hauptsächlich als fester dispergierter Wirkstoff und nur zu einem geringen Teil in gelöster Form enthalten.

Die in den erfindungsgemäßen herbiziden Formulierungen enthaltenen Komponenten setzen sich vornehmlich aus den genannten Komponenten a) bis e) zusammen, wobei die substituierte Phenol/Polyvinylpyrrolidon-Mischung (b), erfindungsgemäß essentiell ist, um das Kristallwachstum des Linurons (a) in einer Fertigmischung, welche noch die Komponenten (c), (d) und (e) enthält, zu verhindern.

Neben diesen fünf Komponenten können in dieser Fertigmischung noch bis zu 25 Gew.-%, vorzugsweise zwischen 0,1 bis 25 Gew.-%, insbesondere 0,1 bis 15 Gew.-%, üblicher Hilfsmittel vorhanden sein.

Solche Hilfsmittel sind z. B. Netzmittel wie Natriumsalze von (C₁₂-C₁₄)-Alkylethersulfaten mit 1 bis 3 EO (EO = Ethylenoxy-Einheiten) (z. B. ®Genapol LRO, HOECHST AG), Entschäumer, vorzugsweise auf Siliconbasis (beispielsweise die Entschäumer-Reihe von Rhône-Poulenc oder Antischaummittel SH von Fa. Wacker), anorganische und/oder organische Verdicker, beispielsweise auf Aluminiumsilikat-, Xanthan-, Methylcellulose-(z. B. die Handelsprodukte ®Tylose der HOECHST AG), Polysaccharid- (z. B. die Handelsprodukte ®Rhodopol 23 der Firma Rhone Poulenc), Erdalkalisilikat-, Gelatine- und Polyvinylalkohol-Basis (z. B. Handelsprodukte ®Mowiol der HOECHST AG), Konservierungsmittel wie beispielsweise solche auf Formaldehyd-, Benzoesäure- und Triphenylzinn- oder lsothiazolinon-Basis (wie z. B. das Handelsprodukt ®Mergal WP1 der Firma Riedel-de Haën), Frostschutzmittel und das Eintrocknen verhindernde Zusätze z. B. Harnstoff und Polyole wie Glykol, Propylenglykol, Glycerin und Zucker.

Als Kombinationen, die im erfindungsgemäßen Fall das Kristallwachstum bei Linuron wirksam unterdrücken, kommen bevorzugt solche in Frage, die als Bestandteil (b) eine Mischung aus Tributylphenol und Polyvinylpyrrolidon (z.B. ®Luviskol K30), (c) Ligninsulfonate in ihren möglichen Salzformen, z. B. ®Vanisperse CB und/oder ®Ufoxane 3A der Firma Borregaard, Sarpsborg, Norwegen, und als Bestandteil (d) ein Na-Salz einer polymerisierten Alkyl-Naphthalinsulfonsäure wie ®Darvan Nr. 3 (R. T. Vanderbilt Comp. Norwalk, CT 06855, USA-Datenblatt 07.01.81) enthalten.

Zur Herstellung der erfindungsgemäßen Dispersionskonzentrate verrührt man die Komponenten mit Wasser, zerkleinert die erhaltene grobteilige Suspension gegebenenfalls durch Vermahlen in einer Korund- oder Zahnscheibenmühle auf Feinheiten von etwa 200 Micron und mahlt das Produkt anschließend in Reibkugelmühlen oder Sandmühlen, bis die Partikel der Dispersion in Teilchengrößen von 0,1 bis 10 Micron, vorzugsweise unter 5 Micron, vorliegen. Die Teilchengrößen können mittels einer Scheibenzentrifuge oder durch Laser-Beugung bestimmt werden.

Die Verwendung der erfindungsgemäßen Dispersionskonzentrate zur Bekämpfung von unerwünschtem Pflanzenwuchs erfolgt auf einfache Weise dadurch, daß man die Dispersionskonzentrate gegebenenfalls mit der gewünschten Menge Wasser zu einer Spritzbrühe verdünnt, kurz verrührt und auf die unerwünschten Pflanzen oder die von diesen befallenen Flächen oder Substrate oder auf Saatgut eine wirksame Menge der erfindungsgemäßen Zubereitung appliziert.

Die nachfolgenden Beispiele dienen zur Erläuterung der Erfindung.

Führt man Versuche durch (s. Beispiele 1 bis 5, Tabelle 1), die entweder das substituierte Phenolderivat gegen ein anderes Produkt ersetzt haben in Gegenwart von Polyvinylpyrrolidon, oder ersetzt man das Polyvinylpyrrolidonderivat durch ein anderes gebräuchliches Hilfsmittel bei Beibehaltung von substituiertem Phenolderivat, dann zeigt sich schon nach ganz kurzer Lagerzeit der entsprechenden Dispersion kräftiges Kristallwachstum, das zu unerwünschter Sedimentation der Linuron-Kristalle führt.

In der nachfolgenden Tabelle 1 sind Beispiele für die hier beschriebenen Effekte aufgeführt, ohne daß die Erfindung darauf beschränkt wäre.

### Vergleichsbeispiele 1 bis 3

In den Vergleichsbeispielen 1 bis 3 (Tabelle 1) wurden wäßrige herbizide Dispersionskonzentrate wie beschrieben hergestellt und bei Temperaturen zwischen -10°C und 50°C über einen Zeitraum von 3 Monaten gelagert und anschließend das Kristallwachstum und die Lagerstabilität des Dispersionskonzentrates untersucht und bewertet.

### Vergleichsbeispiele 4 und 5

Wir zuvor wurden wäßrige herbizide Dispersionskonzentrate hergestellt, welche aber nur jeweils einen der erfindungsgemäßen Zusätze (b) verwenden. Nach der zuvor beschriebenen Lagerung wird das Kristallwachstum und die Lagerstabilität untersucht, wobei die Lagerstabilität instabil und das Kristallwachstum mäßig bis stark ist.

### Beispiele 6 bis 14

Das erfindungsgemäß hergestellte, wäßrige herbizide Dispersionskonzentrat welches beide erfindungsgemäßen Bestandteile der Komponente (b) enthält zeigt, nach über 3-monatiger Lagerung bei Temperaturen von -10°C bis 50°C, eine vorzügliche Lagerstabilität und kein Kristallwachstum.

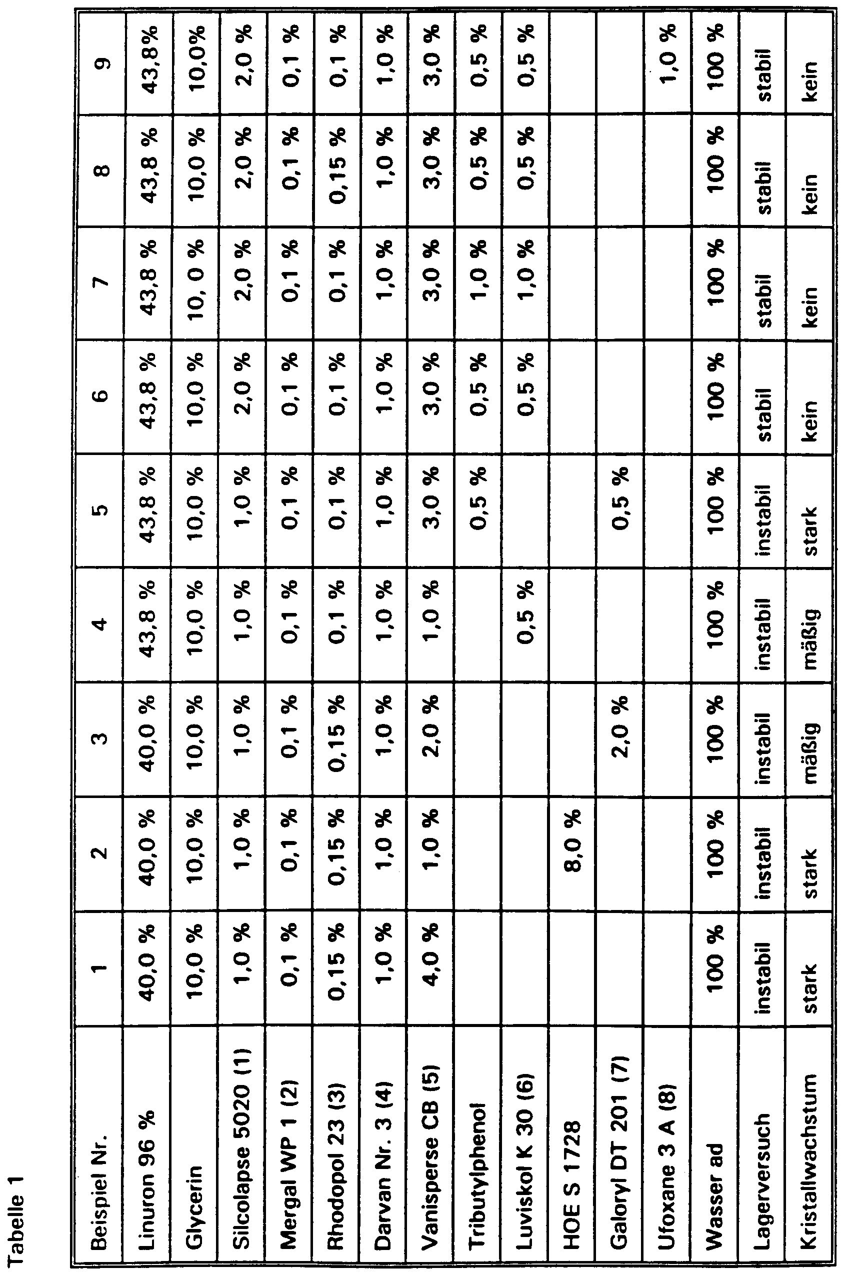

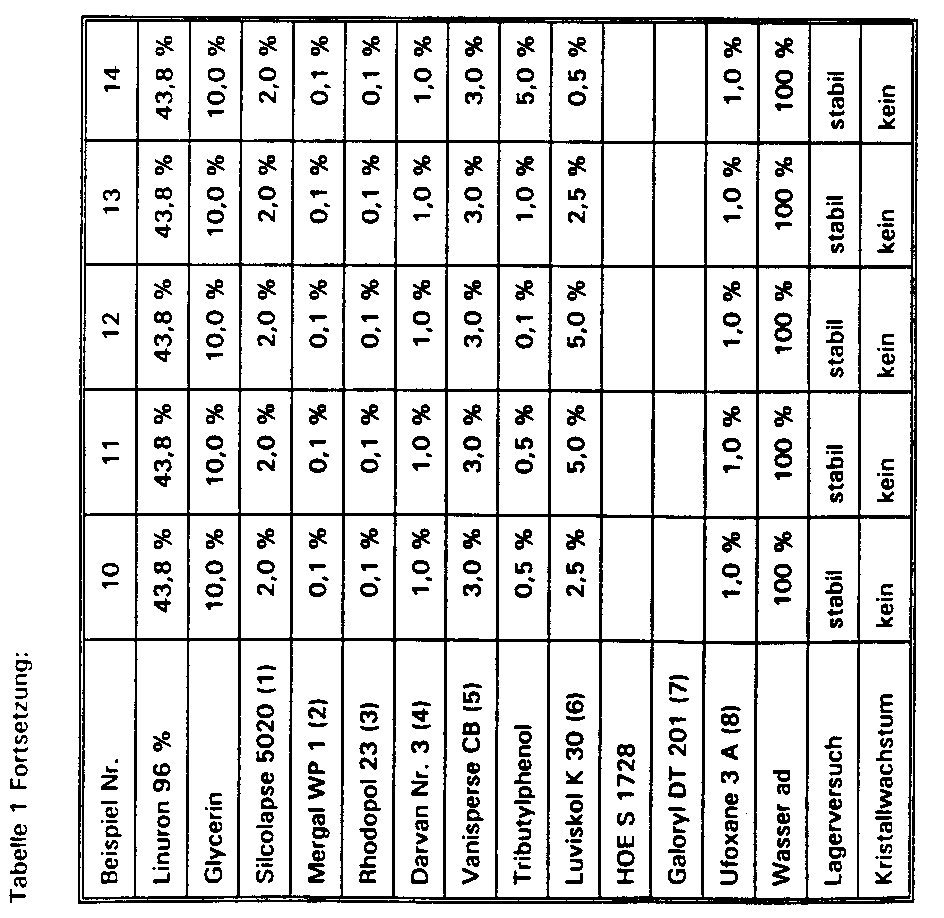

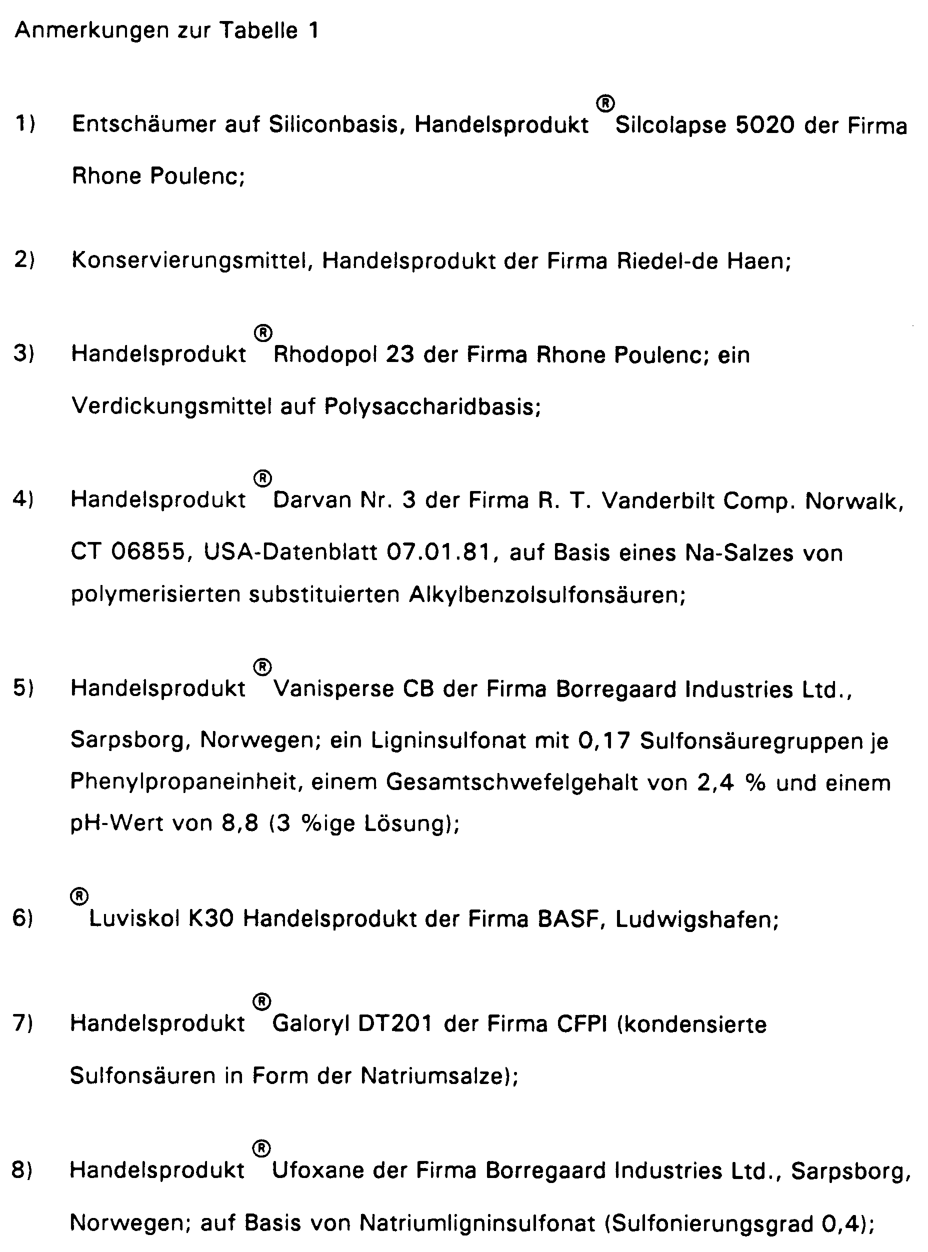

Aus der Tabelle 1 ist zu ersehen, daß es mittels der Kombination von substituiertem Phenol und Polyvinylpyrrolidon gelungen ist, lagerstabile Linuron Dispersionen mit hohem a. i.-Gehalt herzustellen, welches bei Lagerung von mehr als 3 Monaten im Temperaturbereich von -10°C bis 50°C, stabil waren und kein Kristallwachstum zeigten.

## Patentansprüche

1. Herbizide Zubereitung mit einem Gehalt an
a) 1 bis 50 Gew.-% Linuron,
b) 0,1 bis 25 Gew.-% einer Mischung bestehend aus substituierten Phenolen und Polyvinylpyrrolidon in einem Verhältnis 1 : 100 bis 100 : 1,
c) 0,5 bis 20 Gew.-% eines Ligninsulfonats,
d) 0,1 bis 10 Gew.-% eines Salzes einer polymerisierten Alkylnaphthalinsulfonsäure und
e) 20 bis 80 Gew.-% Wasser.

2. Zubereitung nach Anspruch 1, dadurch gekennzeichnet, daß sie
a) 8 bis 45 Gew.-% Linuron,
b) 0,5 bis 12 Gew.-% einer Mischung bestehend aus substituierten Phenolen und Polyvinylpyrrolidon in einem Verhältnis 1 : 20 bis 20 : 1,
c) 0,5 bis 6 Gew.-% eines Ligninsulfonats,
d) 0,1 bis 5 Gew.-% eines Salzes einer polymerisierten Alkylnaphthalinsulfonsäure und
e) 30 bis 65 Gew.-% Wasser
enthält.

3. Zubereitung nach Anspruch 1 oder 2, dadurch gekennzeichnet, daß sie
a) 8 bis 45 Gew.-% Linuron,
b) 0,5 bis 5,5 Gew.-% einer Mischung bestehend aus substituierten Phenolen und Polyvinylpyrrolidon in einem Verhältnis 1:20 bis 10:1,
c) 0,5 bis 4 Gew.-% eines Ligninsulfonats,
d) 0,1 bis 3 Gew.-% eines Salzes einer polymerisierten Alkylnaphthalinsulfonsäure und
e) 30 bis 65 Gew.-% Wasser

4. Zubereitung nach einem oder mehreren der Ansprüche 1 bis 3, dadurch gekennzeichnet, daß sie 0,1 bis 25 Gew.-% üblicher Hilfsmittel aus der Gruppe enthaltend Netzmittel, Entschäumer, Verdicker, Konservierungsmittel, Frostschutzmittel und das Eintrocknen verhindernde Zusätze enthält.

5. Zubereitung nach einem oder mehreren der Ansprüche 1 bis 4, dadurch gekennzeichnet, daß sie als substituiertes Phenol ein mono-, bi- oder trisubstituiertes (C₁-C₁₈)-Alkylphenol enthält.

6. Zubereitung nach einem oder mehreren der Ansprüche 1 bis 5, dadurch gekennzeichnet, daß sie als substituiertes Phenol ein trisubstituiertes (C₁-C₁₀)-Alkylphenol enthält.

7. Zubereitung nach einem oder mehreren der Ansprüche 1 bis 6, dadurch gekennzeichnet, daß sie als substituiertes Phenol Tributylphenol enthält.

8. Verfahren zur Herstellung der nach einem oder mehreren der Ansprüche 1 bis 7 definierten Zubereitungen, dadurch gekennzeichnet, daß man die Komponenten mit Wasser innig vermischt, die erhaltene grobteilige Suspension gegebenenfalls zerkleinert und das Produkt anschließend mahlt.

9. Verwendung der nach einem oder mehreren der Ansprüche 1 bis 7 definierten Zubereitungen, gegebenenfalls nach Verdünnung mit Wasser, zur Bekämpfung von unerwünschtem Pflanzenwuchs.

10. Verfahren zur Bekämpfung von unerwünschtem Pflanzenwuchs, dadurch gekennzeichnet, daß man auf diese oder die von diesen befallenen Flächen oder Substrate oder auf Saatgut oder Pflanzen eine wirksame Menge einer, gegebenenfalls mit Wasser verdünnt, Zubereitung nach einem oder mehreren der Ansprüche 1 bis 6 appliziert.

11. Verwendung eines Dispersionkonzentrates gemäß einem oder mehreren der Ansprüche 1 bis 7 zur Herstellung einer Spritzbrühe.

## Claims

1. A herbicidal formulation comprising
a) from 1 to 50% by weight of linuron,
b) from 0.1 to 25% by weight of a mixture composed of substituted phenols and polyvinylpyrrolidone in a ratio of from 1 : 100 to 100 : 1,
c) from 0.5 to 20% by weight of a ligninsulfonate,
d) from 0.1 to 10% by weight of a salt of a polymerized alkylnaphthalenesulfonic acid, and
e) from 20 to 80% by weight of water.

2. A formulation as claimed in claim 1, which comprises
a) from 8 to 45% by weight of linuron,
b) from 0.5 to 12% by weight of a mixture composed of substituted phenols and polyvinylpyrrolidone in a ratio of from 1 : 20 to 20 : 1,
c) from 0.5 to 6% by weight of a ligninsulfonate,
d) from 0.1 to 5% by weight of a salt of a polymerized alkylnaphthalenesulfonic acid, and
e) from 30 to 65% by weight of water.

3. A formulation as claimed in claim 1 or 2, which comprises
a) from 8 to 45% by weight of linuron,
b) from 0.5 to 5.5% by weight of a mixture composed of substituted phenols and polyvinylpyrrolidone in a ratio of from 1 : 20 to 10 : 1,
c) from 0.5 to 4% by weight of a ligninsulfonate,
d) from 0.1 to 3% by weight of a salt of a polymerized alkylnaphthalenesulfonic acid, and
e) from 30 to 65% by weight of water.

4. A formulation as claimed in one or more of claims 1 to 3, which comprises from 0.1 to 25% by weight of conventional auxiliaries from the group comprising wetting agents, antifoams, thickeners, preservatives, antifreeze agents and additives preventing loss by drying.

5. A formulation as claimed in one or more of claims 1 to 4, which comprises as the substituted phenol a mono-, di- or trisubstituted (C₁-C₁₈)-alkylphenol.

6. A formulation as claimed in one or more of claims 1 to 5, which comprises as the substituted phenol a trisubstituted (C₁-C₁₀)-alkylphenol.

7. A formulation as claimed in one or more of claims 1 to 6, which comprises as the substituted phenol tributylphenol.

8. A process for the preparation of a formulation defined as claimed in one or more of claims 1 to 7, which comprises intimately mixing the components with water, comminuting the coarse suspension obtained, if appropriate, and then milling the product.

9. A method of using a formulation defined as claimed in one or more of claims 1 to 7, after dilution with water if desired, for controlling unwanted plant growth.

10. A method of controlling unwanted plant growth, which comprises applying to the plants or to the areas or substrates affected by them or to the seed an effective amount of a formulation, diluted with water if desired, as claimed in one or more of claims 1 to 6.

11. A method of using a dispersible concentrate as claimed in one or more of claims 1 to 7 for preparing a spray liquor.

## Revendications

1. Préparation herbicide, contenant :
a) de 1 à 50 % en poids de linuron,
b) de 0,1 à 25 % en poids d'un mélange Constitué de phénols substitués et de polyvinylpyrrolidone, selon un rapport de 1:100 à 100:1,
c) de 0,5 à 20 % en poids d'un ligninesulfonate,
d) de 0,1 à 10 % en poids d'un sel d'un acide alkylnaphtalènesulfonique polymérisé,
e) de 20 à 80 % en poids d'eau.

2. Préparation selon la revendication 1, caractérisée en ce qu'elle contient :
a) de 8 à 45 % en poids de linuron,
b) de 0,5 à 12 % en poids d'un mélange constitué de phénols substitués et de polyvinylpyrrolidone, selon un rapport de 1:20 à 20:1,
c) de 0,5 à 6 % en poids d'un ligninesulfonate,
d) de 0,1 à 5 % en poids d'un sel d'un acide alkylnaphtalènesulfonique polymérisé,
e) de 30 à 65 % en poids d'eau.

3. Préparation selon la revendication 1 ou 2, caractérisée en ce qu'elle contient :
a) de 8 à 45 % en poids de linuron,
b) de 0,5 à 5,5 % en poids d'un mélange constitué de phénols substitués et de polyvinylpyrrolidone, selon un rapport de 1:20 à 10:1,
c) de 0,5 à 4 % en poids d'un ligninesulfonate,
d) de 0,1 à 3 % en poids d'un sel d'un acide alkylnaphtalènesulfonique polymérisé,
e) de 30 à 65 % en poids d'eau.

4. Préparation selon l'une ou plusieurs des revendications 1 à 3, caractérisée en ce qu'elle contient de 0,1 à 25 % en poids d'adjuvants usuels choisis dans le groupe contenant les mouillants, les antimoussants, les épaississants, les conservateurs, les antigels et les additifs empêchant la dessiccation.

5. Préparation selon l'une ou plusieurs des revendications 1 à 4, caractérisée en ce qu'elle contient comme phénol substitué un (alkyle en C₁-C₁₈)phénol mono-, bi- ou trisubstitué.

6. Préparation selon l'une ou plusieurs des revendications 1 à 5, caractérisée en ce qu'elle contient comme phénol substitué un (alkyle en C₁-C₁₀)phénol trisubstitué.

7. Préparation selon l'une ou plusieurs des revendications 1 à 6, caractérisée en ce qu'elle contient le tributylphénol comme phénol substitué.

8. Procédé de fabrication des préparations définies dans une ou plusieurs des revendications 1 à 7, caractérisé en ce qu'on soumet à un mélange intime les constituants avec de l'eau, on concasse éventuellement la suspension obtenue en particules grossières, puis on broie le produit.

9. Utilisation des préparations définies dans une ou plusieurs des revendications 1 à 7, éventuellement après dilution à l'eau, pour maîtriser une croissance indésirable de végétaux.

10. Procédé pour maîtriser une croissance indésirable de végétaux, caractérisé en ce qu'on applique sur cette dernière, ou sur les aires ou substrats infestés par cette croissance, ou sur des semences ou des plants, une quantité efficace d'une préparation, éventuellement diluée à l'eau, selon l'une ou plusieurs des revendications 1 à 6.

11. Utilisation d'un concentré en dispersion selon l'une ou plusieurs des revendications 1 à 7 pour préparer une bouillie.
